# EUROPÄISCHE PATENTSCHRIFT

(11) **EP 1 612 449 B1**
(45) Veröffentlichungstag und Bekanntmachung des Hinweises auf die Patenterteilung: **11.03.2009**
(21) Anmeldenummer: 05101254.0
(22) Anmeldetag: 18.02.2005
(51) Int. Cl.: F16F 3/12

(54) **Elastisches Element**
Resilient Element
Elément élastique

(30) Priorität: 28.06.2004 DE 102004031147
(43) Veröffentlichungstag der Anmeldung: 04.01.2006
(73) Patentinhaber: ROBERT BOSCH GMBH, 70442 Stuttgart (DE)
(72) Erfinder: Reiter, Ferdinand, 71706, Markgroeningen (DE)
(74) Vertreter: Körfer, Thomas

(56) Entgegenhaltungen:
- DE-A1- 1 813 622
- DE-U- 1 660 550
- US-A- 3 861 661

## Beschreibung

### Stand der Technik

Die Erfindung geht aus von einem elastischen Element mit einer Schraubenfeder und einem Dämpfungselement zur Dämpfung mechanischer Schwingungen der Feder nach der Gattung des Hauptanspruchs.

Elastische Elemente in Form von Schraubenfedern kommen beispielsweise in Ventilen in verschiedenen Baugruppen zur Anwendung. Insbesondere die Rückstellfeder, welche im geschlossenen Zustand eines Brennstoffeinspritzventils z. B. nach DE 41 25 155 A1 für die dichtende Anlage des Ventilschließkörpers im Dichtsitz sowie für die Schließkraft zum Schließen des Ventils nach dem Zumeßvorgang sorgt, kann beim Betrieb des Ventils zu Schwingungen angeregt werden, die sich in negativer Weise auf angrenzende Bauteile übertragen und zu störender Geräuschentwicklung führen.

In der US-A-3,861,661 wird eine Druckfederanordnung bei einer Kraftfahrzeuganordnung zur Reduzierung der Geräuschentwicklung beschrieben, welche eine Druckfeder und ein in sie im Presssitz eingepasstes im Wesentlichen zylindrisches elastisches Teil aufweist. Die Druckfeder ist an ihrem unteren Ende in einem Sitz eines Arms abgestützt, der mit einem Aufhängerteil des Fahrzeugs verbunden ist. An ihrem oberen Ende sitzt die Druckfeder in einem Sitz, der mit der Kraftfahrzeugkarosserie verbunden ist. Das elastische Teil besitzt die Form eines Zylinders, dessen Außendurchmesser größer ist als der Innendurchmesser der Druckfeder. Das elastische Teil, welches wie oben erwähnt mit Presssitz innerhalb der Druckfeder sitzt, wird durch den Reibwiderstand an dessen Außenumfang gehalten.

Die DE-A-1 813 622 offenbart ein Motorverdichteraggregat, welches in einer hermetisch geschlossenen Kapsel an Schraubenfedern aufgehängt ist, deren eines Ende jeweils an einem an der Kapsel befestigten Träger und deren anderes Ende am Motorverdichteraggregat verankert ist, wobei die zwischen den beiden Verankerungspunkten liegenden freien Windungen der Schraubenfedern ein Schwingen des Motorverdichteraggregats in der Kapsel gestatten. Entlang jeder Schraubenfeder ist im Bereich ihrer freien Windungen ein die Federschwingungen dämpfendes Element aus gummielastischem Werkstoff vorgesehen, welches als Schlauch ausgebildet ist und mit Vorspannung auf die freien Windungen der Schraubenfeder aufgeschoben ist.

In der DE-U-1660550 ist eine Vorrichtung zur Dämpfung der Schwingung von Federungen von Teleskopgabeln an Fahrzeugen offenbart. Dabei sind die axial zu belastenden Federungen mit in radialer Richtung auf diese wirkenden elastischen Dämpfungsmitteln versehen. Das elastische Dämpfungsmittel umgibt dabei die Federung oder ist im Inneren der Feder angeordnet und besteht aus einer elastischen Metallhülse oder aus einem radial spannenden Elastik-Block mit Gummikern.

### Vorteile der Erfindung

Das erfindungsgemäße elastische Element mit den kennzeichnenden Merkmalen des Hauptanspruchs hat demgegenüber den Vorteil, daß ein in der Schraubenfeder angeordnetes Dämpfungselement die Federschwingungen dämpft und damit die Übertragung der Schwingungen auf angrenzende Bauteile und störende Geräuschentwicklung unterbunden wird.

Durch die in den Unteransprüchen aufgeführten Maßnahmen sind vorteilhafte Weiterentwicklungen des im Hauptanspruch angegebenen elastischen Elements möglich.

Vorteilhafterweise kann das Dämpfungselement eine beliebige Querschnittsform wie z.B. V-förmig, quadratisch, dreieckig, oder mehreckig annehmen.

Von Vorteil ist außerdem, daß eine axiale Erstreckung des Dämpfungselements in die Endbereiche der Schraubenfeder dazu führt, daß sich diese bei Transport als Schüttgut und bei der Montage über Vibrationsförderer nicht mehr ineinander verhaken können.

Weiterhin ist von Vorteil, daß das Dämpfungselement in einfacher und kostengünstiger Weise aus Gummi oder Kunststoff herstellbar und leicht montierbar ist.

### Zeichnung

Ein Ausführungsbeispiel der Erfindung ist in der Zeichnung vereinfacht dargestellt und in der nachfolgenden Beschreibung näher erläutert. Es zeigen:
- Fig. 1: einen schematischen Schnitt durch ein erstes Ausführungsbeispiel eines erfindungsgemäßen elastischen Elements, und
- Fig. 2A-F: schematische Aufsichten auf weitere Beispiele elastischer Elemente.

### Beschreibung der Ausführungsbeispiele

Nachfolgend werden Ausführungsbeispiele der Erfindung unter Bezugnahme auf die Zeichnung beispielhaft beschrieben.

Übereinstimmende Bauteile sind dabei in allen Figuren mit übereinstimmenden Bezugszeichen versehen.

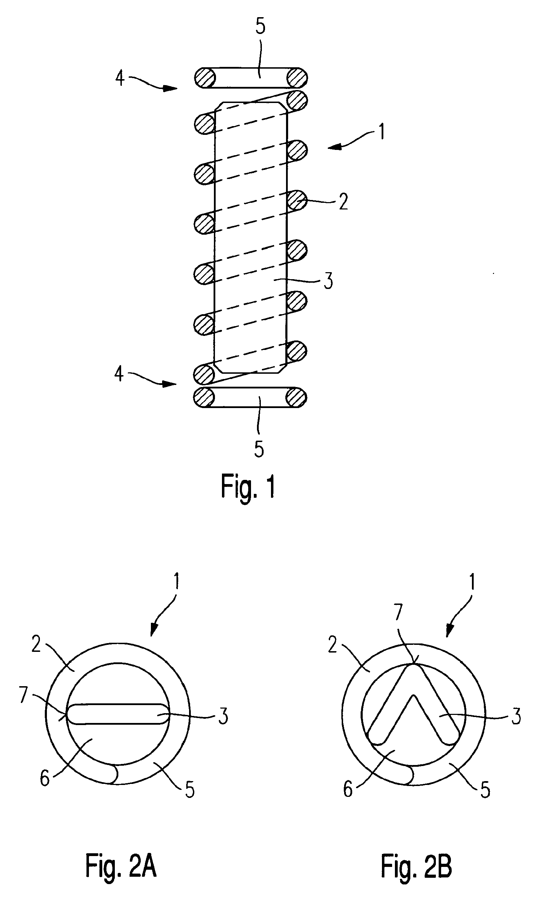

Ein in Fig. 1 dargestelltes Beispiel eines elastischen Elements 1 stellt eine Schraubenfeder 2 dar, welche beispielsweise als Rückstellfeder in einem elektromagnetisch betätigbaren, nicht näher dargestellten Brennstoffeinspritzventil z.B. zum Einspritzen von Brennstoff in den Brennraum einer Brennkraftmaschine eingesetzt sein kann. Derartige Schraubenfedern 2 sind in herkömmlicher Weise gefertigt und liegen in einer Ausnehmung des Ventilgehäuses, welches nach heutiger Fertigungstechnik zur Einsparung von Material und Gewicht möglichst dünnwandig ausgeführt sein soll, an einer Innenwandung an. Durch die Dünnwandigkeit und den direkten Kontakt der Schraubenfeder 2 mit dem Ventilgehäuse werden mechanische Schwingungen der Schraubenfeder, welche bei einem zyklischen Betrieb des Ventils unweigerlich auftreten, auf angrenzende Bauteile übertragen, darin u.U. verstärkt und führen dadurch zu einer störenden Geräuschentwicklung.

Zur Bedämpfung der entstehenden Schwingungen ist daher erfindungsgemäß ein Dämpfungselement 3 vorgesehen, welches in die Schraubenfeder 2 eingesetzt wird. Das Dämpfungselement 3 ist dabei aus Gummi oder Kunststoff gefertigt.

Die Fixierung des Dämpfungselements 3 in der Schraubenfeder 2 erfolgt dabei durch Preßpassung, d.h. das Dämpfungselement 3 weist einen gegenüber einem Innendurchmesser der Schraubenfeder 2 geringfügig größeren Außendurchmesser auf.

Um eine möglichst effektive Dämpfung zu ermöglichen, ist vorgesehen, daß sich das Dämpfungselement 3 zumindest über einen Teil der axialen Länge der Schraubenfeder 2 erstreckt.

Wenn sich das Dämpfungselement 3 dabei bis in Endbereiche 4 der Schraubenfeder 2 erstreckt, kann zudem darauf verzichtet werden, in den Endbereichen 4 mehrere aneinander angelegte Windungen 5 zu wickeln, um zu verhindern, daß sich die Schraubenfedern 2 beim Transport als Schüttgut und beim automatischen Montieren in Vibrationsförderern ineinander verhaken. Dadurch kann auch der für die Schraubenfeder 2 vorhandene Bauraum optimaler genutzt werden, da die aneinander angelegten Windungen 5 in den Endbereichen 4 entfallen können. Dementsprechend ist in Fig. 1 nur eine Windung 5 als Abschlußwindung 5 dargestellt.

In den Fig. 2A bis 2F sind in jeweils gleicher Ansicht in axialer Richtung beispielhaft mögliche Formen von ausgestalteten elastischen Elementen 1 dargestellt.

Die Figuren zeigen dabei jeweils die Endwindung 5 sowie das in einer Ausnehmung 6 der Schraubenfeder 2 angeordnete Dämpfungselement 3, welche unterschiedliche Querschnittsformen aufweisen kann.

Die in Fig. 2A dargestellte Variante ist besonders einfach herstellbar, da lediglich flächig ausgebildet. Andererseits könnte hier zu befürchten sein, daß das Dämpfungselement durch Torsion verrutschen und seine Funktion ganz oder teilweise einbüßen könnte. Mehr als zwei Anlagepunkte 7 des Dämpfungselements 3 an der Schraubenfeder 2 sind daher wünschenswert.

Beispielsweise kann durch Falten des vorher flächig ausgebildeten Dämpfungselements 3 in axialer Richtung eine V-förmige Struktur geschaffen werden, die ebenfalls in einfacher Weise herstellbar und montierbar ist, jedoch über drei Anlagepunkte 7 verfügt und daher in der Preßpassung besser fixiert ist.

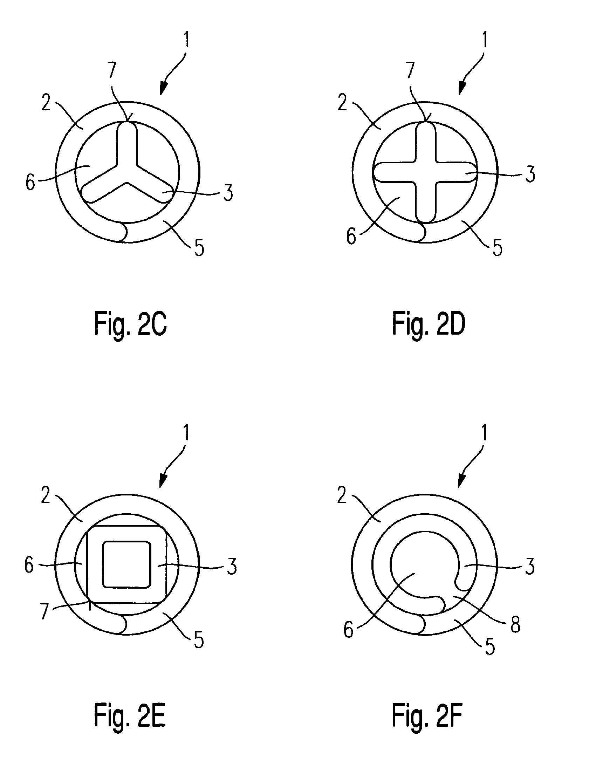

Auch das in Fig. 2C dargestellte Beispiel, welches nicht zur Erfindung gehört, weist drei Anlagepunkte 7 auf, ist jedoch nicht mehr durch Falten herstellbar. Es ist dafür bedingt durch seine Y-Form gegenüber dem in Fig. 2B dargestellten Ausführungsbeispiel stabiler und kann nicht so leicht verrutschen.

Die Figuren 2D und 2E zeigen Beispiele mit vier Anlagepunkten 7, die an den Enden eines X-förmigen Dämpfungselements 3 bzw. an den Ecken eines quadratischen Dämpfungselements 3 angeordnet sind. Das in Fig. 2E dargestellte Ausführungsbeispiel kann durch mehrfaches Falten aus einem flächigen Material hergestellt werden. Die Anzahl der Faltungen bzw. die Querschnittsform kann bei einem derartigen Herstellungsprozeß beispielsweise auch drei, fünf oder mehr betragen. Dies wird jedoch aufwendig, so daß sich für eine große Anlagefläche eher eine Querschnittsform gemäß Fig. 2F anbietet.

Fig. 2F zeigt ein weiteres Beispiel, welches nicht zur Erfindung gehört, eines elastischen Elements 1, bei welchem das Dämpfungselement 3 nicht mehr punktuell, sondern flächig an der Schraubenfeder 2 anliegt, indem es einen ringförmigen Querschnitt mit einer Lücke 8 aufweist. Die hohe Reibung zwischen der großen Oberfläche des Dämpfungselements 3 und der Schraubenfeder 2 sorgt für eine besonders zuverlässige Passung. Zudem ist das Dämpfungselement 3 gemäß Fig. 2F ebenfalls einfach aus einem flächigen Material herstellbar.

Die Erfindung ist nicht auf die dargestellten Ausführungsbeispiele beschränkt und für beliebige Anwendungen von Schraubenfedern 2 geeignet. Insbesondere sind beliebige Kombinationen der verschiedenen Merkmale möglich.

## Patentansprüche

1. Elastisches Element umfassend eine Schraubenfeder (2) und ein Dämpfungselement (3),
wobei das Dämpfungselement (3) in einer Ausnehmung (6) der Schraubenfeder (2) angeordnet ist und durch eine Presspassung in der Schraubenfeder (2) fixiert ist, und
wobei das Dämpfungselement (3) zumindest zwei Anlagepunkte (7) an der Schraubenfeder (2) aufweist,
**dadurch gekennzeichnet**,
und die Anzahl der Anlagepunkte (7) durch Falten des Materials des Dämpfungselements (3) erhöht ist.

2. Elastisches Element nach Anspruch 1,
**dadurch gekennzeichnet,**
**dass** ein Außendurchmesser des Dämpfungselements (3) geringfügig größer als ein Innendurchmesser der Schraubenfeder (2) ist.

3. Elastisches Element nach Anspruch 1 oder 2,
**dadurch gekennzeichnet,**
**dass** sich das Dämpfungselement (2) zumindest über einen Teil der axialen Länge der Schraubenfeder (2) erstreckt.

4. Elastisches Element nach Anspruch 3,
**dadurch gekennzeichnet,**
**dass** sich das Dämpfungselement in Endbereiche (4) der Schraubenfeder (2) erstreckt.

5. Elastisches Element nach einem der Ansprüche 1 bis 4,
**dadurch gekennzeichnet,**
**dass** das Dämpfungselement (3) aus einem flächigen Material hergestellt ist.

6. Elastisches Element nach einem der Ansprüche 1 bis 5,
**dadurch gekennzeichnet,**
**dass** das Dämpfungselement (3) einen I- oder V-förmigen oder einen drei- oder mehreckigen Querschnitt aufweist.

7. Elastisches Element nach einem der Ansprüche 1 bis 6,
**dadurch gekennzeichnet,**
**dass** das Dämpfungselement (3) aus Gummi oder Kunststoff besteht.

## Claims

1. Elastic element, comprising a helical spring (2) and a damping element (3), the damping element (3) being arranged in a recess (6) of the helical spring (2) and being fixed in the helical spring (2) by means of a press fit, and the damping element (3) having at least two bearing points (7) on the helical spring (2), **characterized in that** the number of bearing points (7) is increased due to the folding of the material of the damping element (3).

2. Elastic element according to Claim 1, **characterized in that** an outside diameter of the damping element (3) is slightly larger than an inside diameter of the helical spring (2).

3. Elastic element according to Claim 1 or 2, **characterized in that** the damping element (2) extends at least over part of the axial length of the helical spring (2).

4. Elastic element according to Claim 3, **characterized in that** the damping element extends into end regions (4) of the helical spring (2).

5. Elastic element according to one of Claims 1 to 4, **characterized in that** the damping element (3) is produced from a sheet-like material.

6. Elastic element according to one of Claims 1 to 5, **characterized in that** the damping element (3) has an I-shaped or V-shaped or triangular or polygonal cross section.

7. Elastic element according to one of Claims 1 to 6, **characterized in that** the damping element (3) consists of rubber or plastic.

## Revendications

1. Elément élastique comprenant un ressort hélicoïdal (2) et un élément d'amortissement (3),
l'élément d'amortissement (3) étant disposé dans un évidement (6) du ressort hélicoïdal (2) et étant fixé par un ajustement serré dans le ressort hélicoïdal (2), l'élément d'amortissement (3) présentant au moins deux points d'appui (7) sur le ressort hélicoïdal (2),
**caractérisé en ce que**
le nombre des points d'appui (7) est augmenté par le pliage du matériau de l'élément d'amortissement (3).

2. Elément élastique selon la revendication 1,
**caractérisé en ce que**
un diamètre extérieur de l'élément d'amortissement (3) est légèrement plus grand qu'un diamètre intérieur du ressort hélicoïdal (2).

3. Elément élastique selon la revendication 1 ou 2,
**caractérisé en ce que**
l'élément d'amortissement (2) s'étend au moins sur une partie de la longueur axiale du ressort hélicoïdal (2).

4. Elément élastique selon la revendication 3,
**caractérisé en ce que**
l'élément d'amortissement s'étend dans des zones d'extrémité (4) du ressort hélicoïdal (2).

5. Elément élastique selon l'une quelconque des revendications 1 à 4,
**caractérisé en ce que**
l'élément d'amortissement (3) est fabriqué à base d'un matériau en plaque.

6. Elément élastique selon l'une quelconque des revendications 1 à 5,
**caractérisé en ce que**
l'élément d'amortissement (3) présente une section en I ou en V ou une section triangulaire ou polygonale.

7. Elément élastique selon l'une quelconque des revendications 1 à 6,
**caractérisé en ce que**
l'élément d'amortissement (3) est en caoutchouc ou plastique.
